## Europäisches Patentamt

(19) **European Patent Office**

**Office européen des brevets**

(11) Publication number: **0 027 523**
**B1**

## EUROPEAN PATENT SPECIFICATION

(45) Date of publication of patent specification: **25.07.84**

(51) Int. Cl.³: **H 04 B 7/185**

(21) Application number: **80105150.9**

(22) Date of filing: **29.08.80**

(54) Method for maintaining synchronization in a TDMA satellite communication system.

(30) Priority: **17.10.79 US 85555**

(43) Date of publication of application:
**29.04.81 Bulletin 81/17**

(45) Publication of the grant of the patent:
**25.07.84 Bulletin 84/30**

(84) Designated Contracting States:
**BE CH DE FR GB IT LI NL SE**

(56) References cited:
**US - A - 3 761 814**

**REVIEW OF THE ELECTRICAL
COMMUNICATION LABORATORIES, vol. 19,
nrs. 5-6, May-June 1971, Tokyo, JP IKEDA:
"Signaling system in the SMAX satellite
communication system", pages 594-610
REVIEW OF THE ELECTRICAL
COMMUNICATION LABORATORIES, vol. 26,
nrs. 1-2, January-February 1978, Tokyo, JP
SAMEJIMA: "Burst synchronization for domestic
TDMA system", pages 118-125**

(73) Proprietor: **International Business Machines
Corporation
Old Orchard Road
Armonk, N.Y. 10504 (US)**

(72) Inventor: **Fennel, John W., Jr.
3900 Mt. Olney Lane
Olney Maryland 20832 (US)**
Inventor: **Yin, Huo-Bing
9820 Conestoga Way
Potomac Maryland 20854 (US)**

(74) Representative: **Lewit, Leonard, Dipl.-Ing.
Schönaicher Strasse 220
D-7030 Böblingen (DE)**

## Description

The invention relates to a method for preventing failure of system synchronisation as described in the preamble of claim 1.

With respect to such a system "Review of the Electrical Communication Laboratories", Vol. 26, Nos. 1 to 2, January—February 1978, pages 118 to 125, Tokyo, Japan, Samejima: "Burst Synchronization for Domestic TDMA System" describes an automatic reference station transfer technique wherein the principal reference station monitors the quality of its own synchronization burst and will abandon its primary reference function if the monitored quality has deteriorated. The reference stand-by station monitors for the occurrence of the synchronization pulses from the primary reference station. When the reference stand-by station fails to detect the synchronization pulses from the primary reference station, it commences operation as the principal reference station. In the system described in this article each station transmits one sync burst and one data burst. A sync burst comprises 64 bits, including 8 bits for station identification code (SIC). The reference station and the reference stand-by stations check the quality of respective sync bursts by watching the SIC sent back from the satellite and measuring the bit error rate (BER). If BER is detected to be worth than $10^{-2}$, it is turned to non-reference mode.

· Thus, in the system described above monitoring of the frame reference burst is limited to the reference or reference stand-by station.

In "Review of the Electrical Communication Laboratories", Vol. 19, Nos. 5 to 6, May—June 1971, Tokyo, Japan, an article by H. Ikeda et al with the title "Signalling System in the SMAX Satellite Communication System" describes a satellite communication system wherein transmission errors generate negative acknowledgement signals which stimulate the re-transmission of the erroneously received information. When data is transmitted from station A it includes error checkable bits in the signal. Every group of data transmitted from station A is also temporarily stored in a re-transmitting buffer memory at station A. When the transmitted data is received at station B, if the error checkable bits indicate a transmission error, station B will transmit a negative acknowledgement signal (NACK) back to station A. When station A receives the negative acknowledgement signal, it terminates further transmissions and activates the re-transmitting buffer memory, so as to resend all of the data which had been previously transmitted and which initiated the NACK signal.

In order to assure that the synchronous operation of the network will continue when the reference station experiences a failure, the prior art has provided an alternate reference station which is designated in the network, and which will assume the role of the primary reference station in the event that the existing primary reference station must abdicate its primary reference role. The operation of transferring control from the primary reference station to the alternate reference station has been called baton passing. Prior art baton passing techniques have employed a relatively coarse criterion of a total absence of acknowledgements from other stations in the network as an indication that they have not received the FRBs from the primary reference station.

However, as TDMA satellite communication systems have become more sophisticated, providing greater function at higher speeds, a more refined so called baton passing technique is required since the prior art baton passing technique would allow the reference station to meet the prior art criterion for good health and yet still be sending bursts of information having a high channel error rate. Since the reference station also generally serves the function of making assignments for all of the subsidiary stations based upon a capacity request in the XRB, it would consequently be assigning the wrong channel allocations if the reference reads the XRB incorrectly which would create chaotic results in the TDMA system.

It is therefore an object of the invention to provide a more refined baton passing method featuring more extensive frame reference burst monitoring for a TDMA satellite communication network.

This object is achieved by a method as described in the characterizing portion of claim 1.

By monitoring the frame reference burst from the primary reference station at each of the multiple stations reliability of the system is greatly enhanced. Transfer of the reference function from the primary station to the alternate station does not depend on the lack of reception of a single acknowledgement signal. Rather, a certain number of negative acknowledgement signals is tolerated until a predefined threshold value is reached. This is a refinement over the prior art technique of merely detecting the gross lack of an acknowledgement from the subsidiary stations with respect to the proper reception of the frame refrence burst.

The invention and the advantages of the new baton passing method will now be described with reference to a preferred embodiment in combination with the appended drawings.

Figure 1 illustrates a TDMA satellite configuration,

Figure 2 shows the frame, frame group, and superframe format including control field and traffic field for a TDMA satellite communication system,

Figure 3 is a block diagram, for the reference station, of a preferred embodiment of the present invention,

Figure 4 is a block diagram, for the alternate (reference standby) station, of a preferred embodiment of the present invention,

Figure 5 is a block diagram, for all stations in a reference and alternate station group, of a preferred embodiment of the present invention,

Figure 6 illustrates a block diagram of a normal ground station,

Figure 7 is a state diagram, which summarizes all baton passing functions, of a preferred embodiment of the present invention, and

Figure 8 illustrates a timing diagram for the baton passing operation.

Discussion of the preferred embodiment

In a TDMA satellite communication system, synchronization is provided by a reference station. The baton passing operation is a necessity in the event of reference station failure, malfunction or exposure to high channel error environment. The baton pass allows the alternate station (reference standby) to take over the reference role.

There can be a number of stations having accurate and stable clocks and these are designated as the reference and alternate group. Only those stations in this group can become the reference or alternate station.

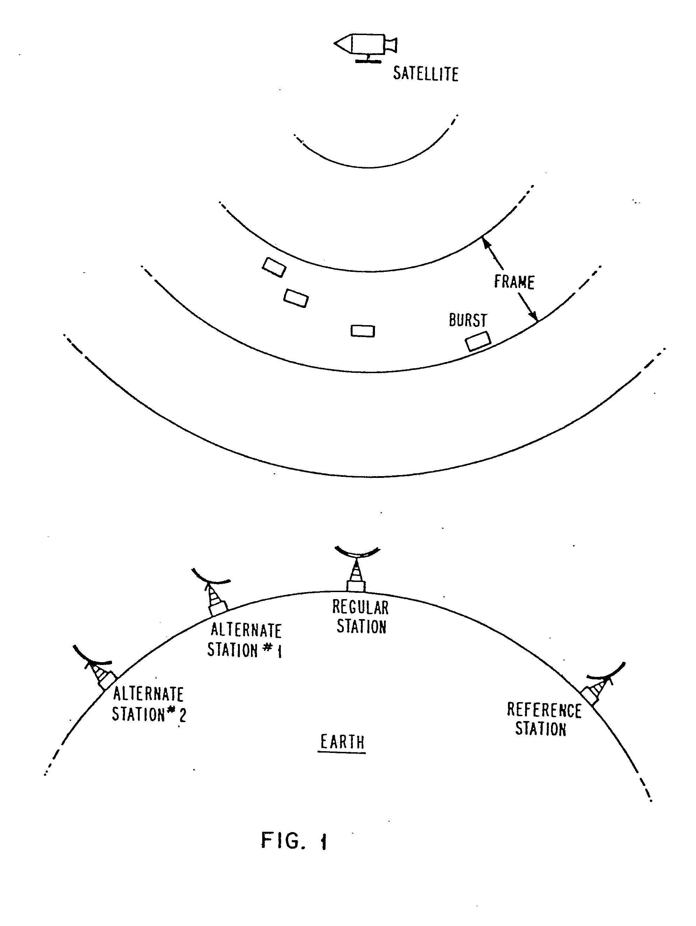

Figure 1 illustrates a typical TDMA satellite communications configuration. Every ground station transmits its burst in the appropriate time slot within a time frame using synchronization information from the reference station to insure that there is no overlap of signal bursts received at the satellite.

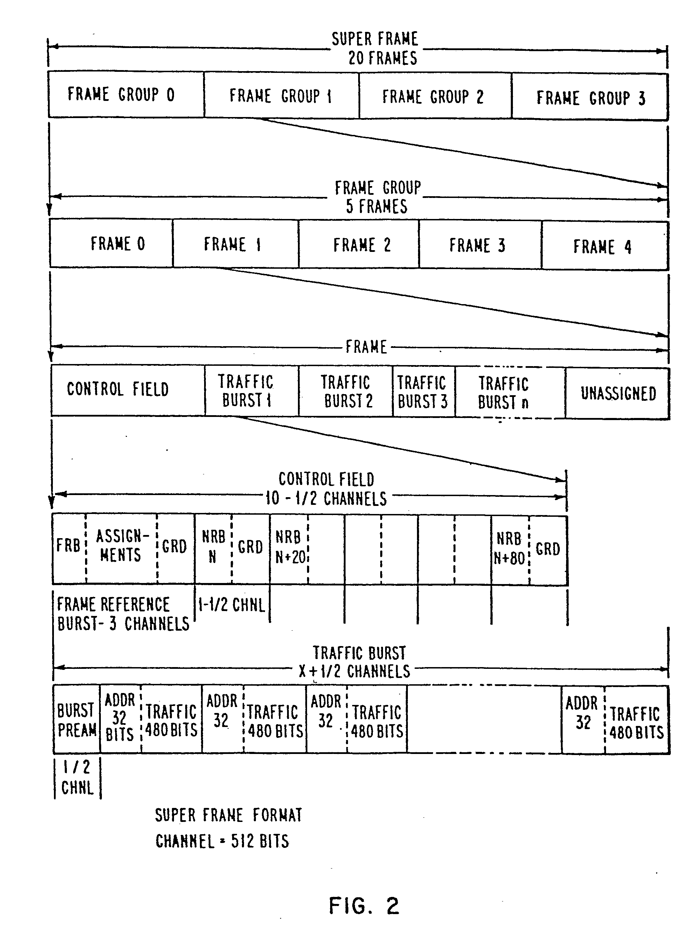

Figure 2 shows the superframe format. Each frame contains bursts from the reference station and bursts from each of the subscribing stations in a transponder net. The reference station broadcasts the frame reference burst (FRB) once every frame. The FRB consists of a preamble including a unique word, carrier recovery and clock recovery information, frame ID, time of day, delay deviation, assignment field and an undefined field, and is transmitted at the beginning of the frame to provide frame/superframe synchronization and channel allocation messages to all ground stations. Within the control field there are transmit reference bursts (XRB) emitted at the appropriate time slot once per superframe by every ground station. Each ground station utilizes its XRB to sustain transmit clock synchronization, to transmit certain status information including acknowledgements of FRB reception from the reference station and XRB reception from the alternate station, and to transmit demand requests for transponder capacity. Thus control communication between the reference station, alternate station and other stations in a transponder net is established via the FRB and XRB. It is important to maintain the FRB and the reference station duties/functions in case of the reference station's failure, malfunction or exposure to severe atmospheric disturbances.

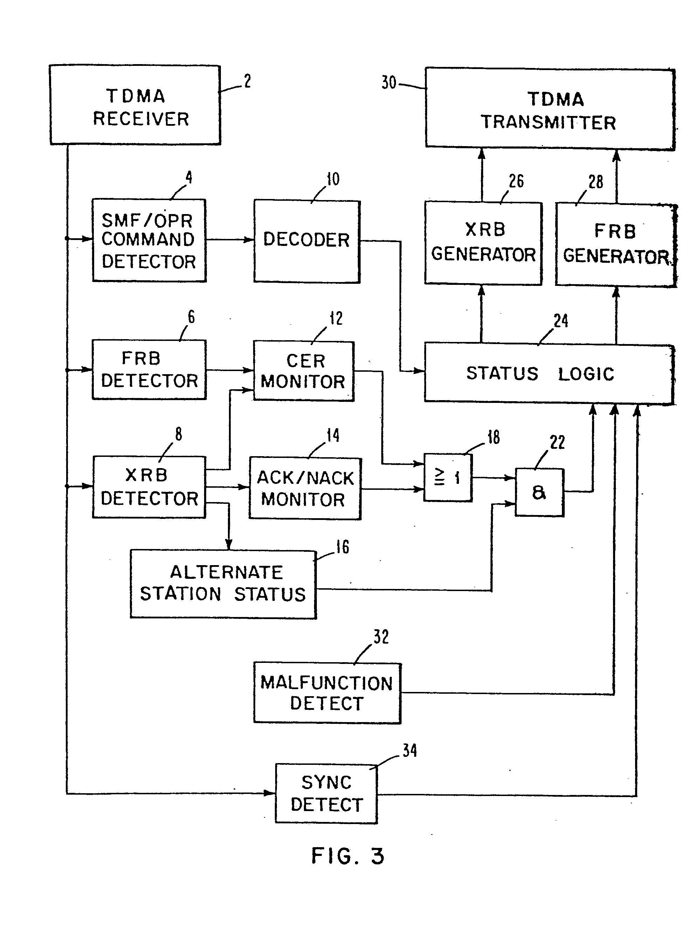

Figure 3 depicts the baton passing apparatus of this invention at the reference ground station. The reference station broadcasts the FRB, generated by FRB generator 28, once per frame via the TDMA transmitter 30 and transmits its XRB once per superframe from the XRB generator 26. The TDMA receiver 2 receives this information and directs it to FRB detector 6 and XRB detector 8, respectively. The XRB detector receives all the XRBs in the transponder net.

Since the FRB and XRB play a vital role in the TDMA satellite communication system, they are required to have a highly reliable transmission. The messages in the FRB and XRB are protected by using a forward error correction code (FEC) and a cyclic redundancy check (CRC). The FRB's reliability is further enhanced by repetitive transmission; four times in a superframe, as illustrated in Figure 2. Hence a reliable FRB can still be maintained even at a CER of (channel error rate)$=10^{-2}$. However status information and demand requests in the XRB from all stations are not as well protected as the FRB and the probability of decoding errors could be higher than that of the assignments contained in the (FRB). If the reference station is exposed to high CER, the reference station can still transmit its FRB reliably to all ground stations but will receive XRBs from all ground stations with some errors. Consequently the reference station can assign channel allocations based upon erroneous information.

The FRB is detected by the FRB detector 6 and its own station health is analyzed by the CER monitor 12. The CER can be measured by counting non-zero syndromes of the forward error correction code of the assignments in the FRB. The FRB acknowledgements are monitored by the XRB detector 8 and the negative acknowledgements are counted by the ACK/NACK monitor 14. If either the output of the CER monitor 8 or the output of the ACK/NACK monitor 14 is larger than a predetermined threshold value, the output of the "OR" gate 18 goes active.

The reference station also determines the health of the alternate station from the XRBs received from all stations. If the alternate station is healthy (CER$<10^{-4}$), the output of the alternate station status logic 16 is active. If both inputs to the "AND" gate 22 are active, the output of the "AND" gate 22 activates the status logic 24 to inhibit the FRB generator 28, thus the reference station stops broadcasting the FRB and relinquishes its reference role. The reference station is further provided with internal diagnostic programs so that the devices are periodically checked for malfunction. If malfunction is detected by the internal malfunction device 32, its output activates the status logic 24 to inhibit the FRB generator 28 and force the reference station to abdicate its role as the primary reference station. The system is further provided with a synchronization detector 34 to monitor the transmit and receive synchronization on a superframe and frame basis respectively. Once the station detects a non-synchronizing condition, whether it is derived from the receive or transmit portion of the equipment, the output of the synchronization detector activates the status logic 24 to inhibit the FRB generator 28.

Thus no FRB will be transmitted and the reference station relinquishes its role. The system can also accept a command from system management facility (SMF) or operator via the route through the SMF/operator command message detector 4 and decoder 10, to deactivate or invoke the FRB generator 28.

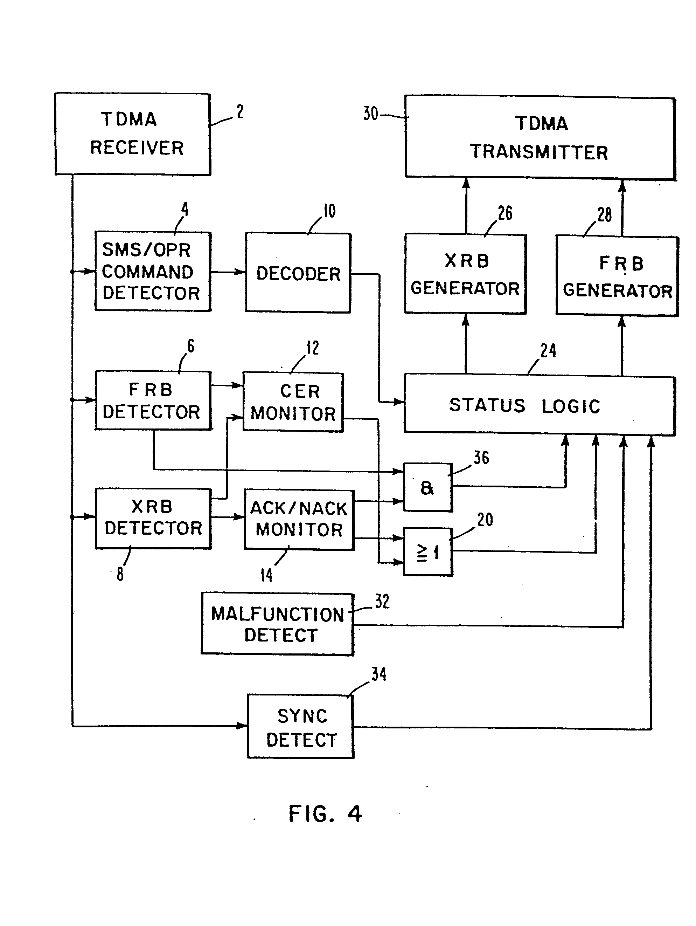

Refer to Figure 4 for the alternate reference station's baton passing apparatus. The majority of the implementation in Figure 4 is identical to that of the reference station as shown in Figure 3 except for the following differences. The FRB generator 28 is inhibited by the status logic 24 until it is invoked when the alternate becomes the primary reference station. The conditions for the alternate station to assume the primary reference role are the failure to receive an FRB ($\overline{FRB}$), as the reception of XRBs from other ground stations indicating that the number of NACKs for the reference station's FRB exceeds the threshold level. The "AND" gate 36 is thus activated and alarms the status logic 24 to invoke the FRB generator 28 of Figure 4. As an alternate station, its own health is continuously monitored by the CER monitor 12 and it also detects acknowledgements from all ground stations in the transponder net from the ACK/NACK monitor 14 to make sure that its own XRB is well received by other ground stations. If the number of NACKs on its own XRB exceeds a fixed threshold value or if its CER exceeds its predetermined threshold level, the "OR" gate 20 becomes active and alarms the status logic 24. A message is put into its XRB which notifies all stations in the transponder net that the alternate station has abdicated its alternate station role. Upon receipt of this message the reference station appoints a new alternate station from a table in the alternate station status block 16 which stores a list of the stations in the reference and alternate group along with their corresponding operational status, so that the new alternate station will be ready to take over the primary reference role in the event that baton passing functions become needed. Other functions, such as internal malfunction detection 32 and synchronization detection 34 are identical to that of Figure 3. Any symptom of a problem shown either by the malfunction detector 32 or the synchronization detector 34 causes the alternate station to relinquish its alternate role. Furthermore the alternate station can be commanded either by the SMF or an operator to abdicate its alternate role.

If the abdication of the reference or alternate role and the assumption of the reference role by the alternate station follows the above rules, simultaneous FRB transmission from the reference and alternate station is extremely unlikely.

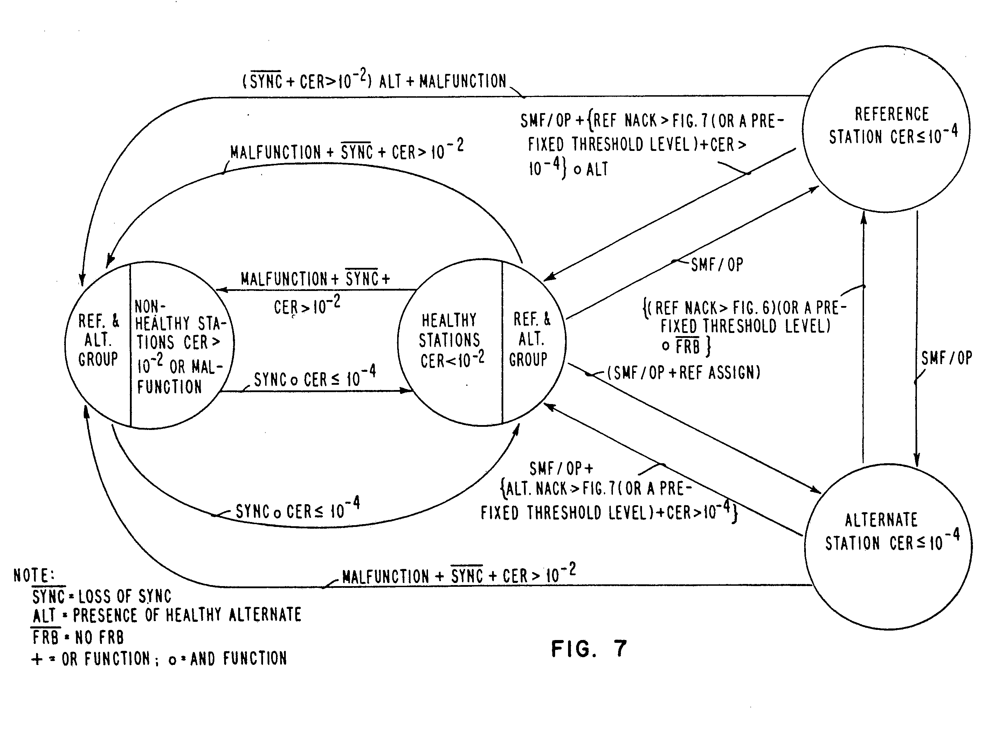

Since the reference and alternate stations can play either role, the implementation must be identical. Figure 5 illustrates the implementation including both reference and alternate station functions. When the station acts as the reference station, the functions as shown in Figure 3 will follow. When the station acts as an alternate station, the functions as shown in Figure 4 will follow.

Suppose some stations experience reference station FRB failure briefly in the middle of a superframe, caused perhaps, by an airplane passing through the beam width of the reference station. As a consequence, some stations may not receive the FRB information. The number of NACKs sent out by stations, which are received at the reference and alternate stations may exceed the predetermined threshold level at the reference two superframes later (due to round trip delay) and this could cause the reference station to abdicate. Initially, the number of NACKs seen by the alternate may not be enough to cause it to become referenced. However, after reference abdication, the number of NACKs is very large (probably the complete set of normal stations). This large number of NACKs, and no FRB causes the alternate to assume the reference role.

The situation of a passing airplane could happen at any station. When it occurs at a subscribed station, the increase in number of NACKs is minimal (one) and this will not exceed the threshold settings at the reference station or alternate station. When such interference occurs at the alternate station, all stations could receive no XRB from the alternate station. Again, this happens only temporarily and thus normal reception of the XRB (from the alternate station) resumes one superframe later. No detrimental effects result from this momentary interruption.

The channel error rate (CER) threshold criteria require that the reference and alternate stations should have lower CER requirements, i.e., $CER < 10^{-4}$ in order to perform their roles with the necessary accuracy. However, the CER of other subscribed stations in the network can degrade down to $10^{-2}$ and they can still maintain usable voice communication.

Acknowledgement by any station of the reception of FRBs or XRBs from the reference or alternate station, respectively, is transmitted by the ACK/NACK transmitter 33 in the receiving station of Figure 6 via two bits in one of the bytes of its XRB representing the status of the reference and alternate station, as seen by that ground station. If there are a large number of NACKs which appear, this would mean that the reference station is not functioning effectively and its role as the primary reference station should be relinquished.

Similarly if the alternate station observes a large number of NACKs of its XRBs, the alternate station should relinquish its role as the alternate. Then the reference station will appoint a new alternate station which is healthy, i.e. $CER < 10^{-4}$. This provides a preventative measure against the alternate station taking over the reference's role when the alternate is not in a condition to do so.

A threshold which identifies how many NACKs are allowed must be set for the alternate station to take the reference role. Likewise a threshold for the reference or alternate abdication must also be established. The established thresholds are based upon a fixed probability so that this criterion applies

**0 027 523**

equally well for a network having a large number of stations or small number of stations. The NACK threshold requirements, thus established are shown in Table 1 and Table 2.

TABLE 1

Number of FRB NACKs (Negative Acknowledgements) must be received by alternate station for taking over the the reference role versus number of stations in a network

| No. of stations | No. of NACKs |
| --- | --- |
| 10 | 7 |
| 20 | 16 |
| 30 | 26 |
| 40 | 35 |
| 50 | 45 |
| 60 | 54 |
| 70 | 64 |
| 80 | 74 |
| 100 | 94 |

TABLE 2

No. of FRB NACKs or No. of XRB NACKs must be received by the reference station or alternate station respectively to relinquish their respective role versus No. of stations in a network

| No. of stations | No. of NACKs |
| --- | --- |
| 10 | 3 |
| 20 | 4 |
| 30 | 4 |
| 40 | 5 |
| 50 | 5 |
| 60 | 6 |
| 70 | 6 |
| 80 | 6 |
| 100 | 6 |

A typical ground station as shown in Figure 6 is also provided with FRB detector 6 and CER monitor 12, malfunction detector 32 and synchronization detector 34. The detection of a failure in any one of these functions, such as when the station experiences severe atmospheric disturbances (large CER), a malfunction or a loss of synchronization, can alarm the status logic 24 which will inhibit transmission to assure the TDMA system's integrity.

As mentioned before, the CER requirements for the alternate and reference station should be lower than those of normal subscribed stations in order to maintain proper and efficient system operation. Suppose that the reference station is experiencing a degradation of the channel environment. Once it determines that CER is larger than $10^{-4}$, the reference station should stop its FRB transmission. Then, the alternate station at first will receive no FRB and this will be followed by the reception of a large number of NACKs (indicating no FRB) from all stations. The alternate station will then take over the reference station's duties and will become the new primary reference station of the transponder net. Furthermore the new reference station will appoint a new alternate station from the reference/alternate groups.

Although the old reference station has relinquished its duties as a reference, it can still remain operating as one of the regular stations since communication links can be maintained up to CER$<10^{-2}$. Likewise the alternate station can become one of the regular stations when exposed to $10^{-2}>$CER$>10^{-4}$.

It may be desirable to define any station as nonhealthy if CER$>10^{-2}$. Such stations should be retired from the active role of transmitting XRBs and data. (Incoming calls can be blocked). However, the station should keep its passive mode in operation to continuously monitor FRBs. Once it determines that its health has been recovered, the station should re-enter the network. The definition of nonhealthy station includes those stations experiencing malfunctions. A malfunction can prevent any station from monitoring FRBs until it has been repaired.

The baton passing functions described can be summarized in the state diagram shown in Figure 7.

There are a total of four states for a given station; the healthy stations (with a reference/alternate group) ($10^{-2}>$CER), the alternate station (CER$<10^{-4}$), the reference station (CER$<10^{-4}$) and nonhealthy stations ($10^{-2}<$CER). The rules with each path denote the required conditions for changing states.

5

(1) One of the stations from the reference and alternate group station becomes reference station.
Rule: SMF/OP, Command either from SMF (system management facility) OR operator, AND station CER$<10^{-4}$.

(2) Reference station becomes alternate station.
Rule: SMF/OP, command either from SMF OR operator AND CER$<10^{-4}$.

(3) Alternate station returns to the reference and alternate group.
Rule: SMF/OP+ALT. NACK>Table 2 (or a preset threshold level)+CER$>10^{-4}$.
The alternate station relinquishes its alternate role if and only if
1. Command either from SMF or operator, OR
2. Alternate receives a number of NACKs of its XRB greater than those established in Table 2 (or a preset threshold level), OR
3. Alternate experiences CER$>10^{-4}$.

(4) Alternate station is appointed from the reference and alternate group.
Rule: SMF/OP+Ref. Assign.
Any station having CER$<10^{-4}$ in the reference and alternate group can become an alternate if and only if
1. Command either by SMF or operator, OR
2. Assigned or appointed by the reference station.

(5) Alternate station becomes reference station.
Rule: $\overline{\text{FRB}}$ o [Ref. NACK>Table 1 (of a preset threshold level)].
Alternate can become a reference if and only if the alternate station observes
1. No FRB is present, AND
2. Reference NACKs are greater than those shown in Table 1 (or a preset threshold level) for a number of superframes.

(6) Reference station goes back to the reference and alternate group.
Rule: SMF/OP+[Ref. NACK>Table 2 (or a preset threshold level)+CER$>10^{-4}$ o ALT.
The reference station returns to the reference and alternate group if and only if
1. Command either from SMF or operator, OR
2. Reference station receives a number of NACKs greater than those shown in Table 2 (or a preset threshold level), or CER$>10^{-4}$ AND the presence of a healthy alternate station. If there is no healthy alternate station existing at that moment, an alternate station must be assigned before the reference station abdicates.

(7) Reference station becomes nonhealthy.
Rule: $(\overline{\text{SYNC}}+\text{CER}>10^{-2})$ o ALT+Malfunction
The reference station becomes nonhealthy and returns to the nonhealthy reference and alternate group if the following conditions occur.
1. Reference station experiences malfunction, OR
2. Reference station has lost receive synchronization OR exposed to a high CER (CER$>10^{-2}$) AND the pre-presence of a healthy alternate station. If there is no healthy alternate station existing at that moment, an alternate station must be assigned before the reference station abdicates.

(8) Stations in the nonhealthy reference and alternate group become healthy.
Rule: SYNC o CER$<10^{-4}$
The nonhealthy station in the reference and alternate group becomes healthy if the following conditions are met
1. CER is less than or equal to $10^{-4}$, AND
2. Synchronization has been established.

(9) Alternate station becomes nonhealthy.
Rule: Malfunction+CER$>10^{-2}$+$\overline{\text{SYNC}}$
The alternate station becomes nonhealthy and retires to the nonhealthy reference and alternate group if the conditions exist
1. Malfunction occurs, OR
2. The alternate station experiences CER$>10^{-2}$, OR
3. The alternate station is unable to acquire either transmit OR receive synchronization.

(10 & 11) Healthy station (either from the reference and alternate group or normal subscribed ground stations) becomes nonhealthy.
Rule: Malfunction+CER$>10^{-2}$+$\overline{\text{SYNC}}$
The conditions are similar to that of the above rule 9.

(12) Nonhealthy station becomes healthy.
Rule: SYNC o CER$<10^{-4}$
These are identical conditions as explained in the rule 8.

By the use of this implementation for transfer of the reference station duties to an alternate station (standby reference station) or vice versa, system integrity is maintained. Moreover the baton passing technique is automatic and adaptive to environmental changes such that it prevents the loss of system synchronization in the TDMA configuration. Flexibility is provided since the automatic procedure can be overridden either by SMF command or operator command. Accordingly, it is possible to obtain baton passing operations having excellent performance qualities.

Detailed description of the operation

Since the satellite link exhibits long round trip delay characteristics, there is a substantial delay between the transmission of the FRB and the reception of corresponding ACK, NACK, contained in the XRBs. The baton passing scheme should be crisp and the time involved in the completion of duty transfer should be less than 3 seconds. Otherwise the system cannot sustain synchronization during the outage of FRBs and will drift out of synchronization.

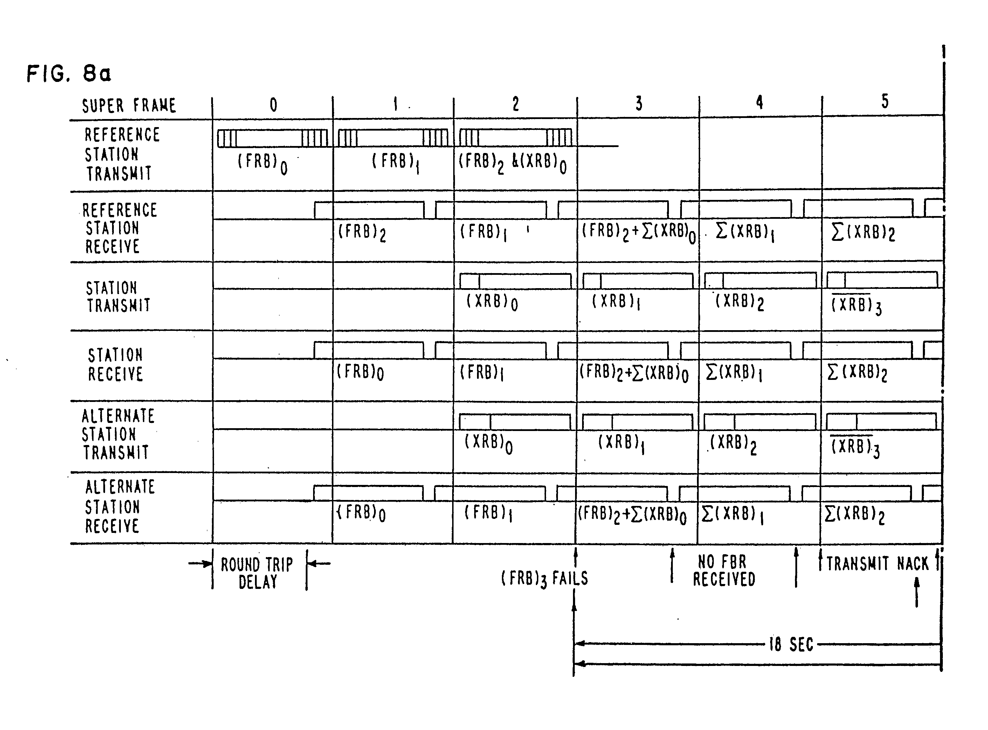

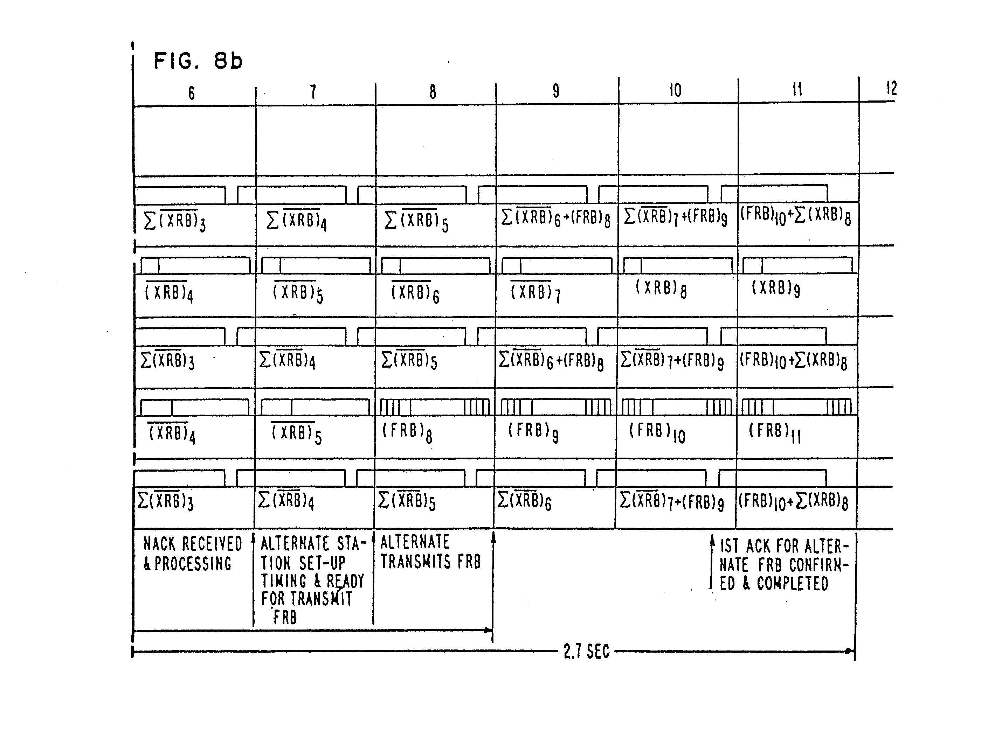

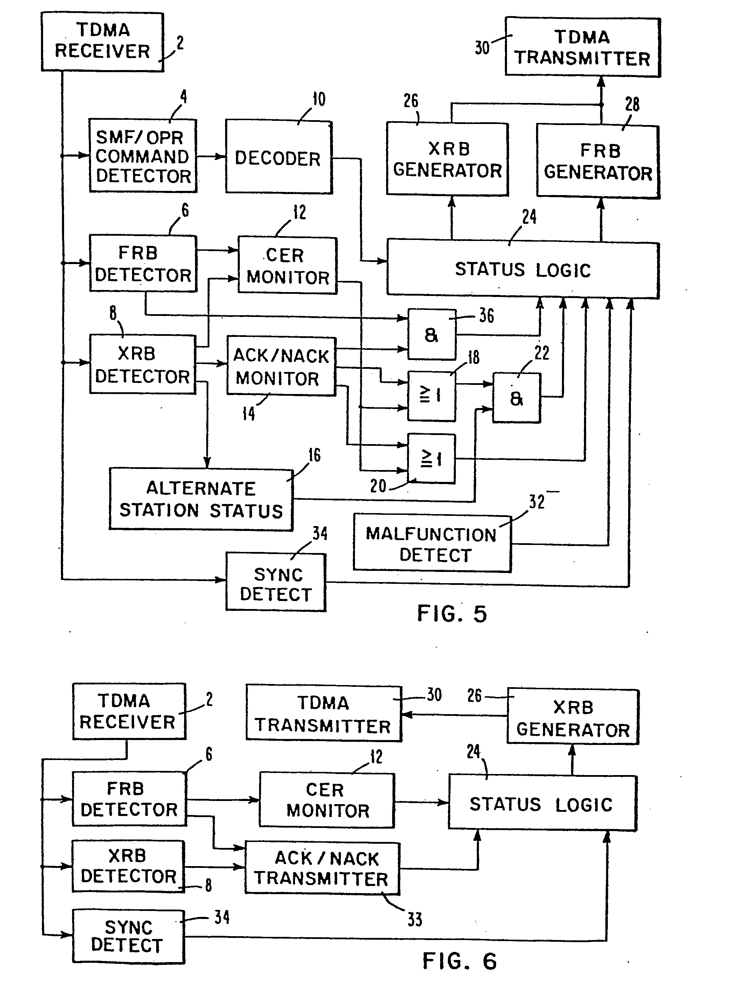

An illustration of the elapsed time between transmission of FRB and reception of XRB at the reference station is depicted in Figure 8. At the superframe "0", the reference station transmits an FRB per frame or FRBs 20 times per superframe (300 msec) denoted as (FRB). All stations (including the reference station) in a transponder network begin to receive the (FRB) about 250 msec (average round trip delay) later. Completion of assignment reception extends into the superframe "1". Every station is assigned an appropriate time slot for transmission. All stations after processing of received FRB, send back ACKs or NACKs to the reference station during the superframe "2". Completion of receiving and processing all XRBs ($(XRB)_0$ in Figure 8) at the reference station lasts almost until the end of the superframe "3". During this time, the alternate station performs the same task as performed by the reference station so that the alternate station knows the ACK or NACK count. It takes four superframe times or 1.2 seconds for the reference station to exercise FRB transmission and reception of ACKs or NACKs.

Notice that although FRB and acknowledging XRB are coexisting every superframe, the XRB represents the ACK or NACK for a previous FRB. For example, the bursts in the control field of the nth superframe are $(FRB)_n$ and $(XRB)_{n-2}$. $(XRB)_{n-2}$ represents the ACKs or NACKs from all stations responding to the FRB of the (n−2)th superframe.

Similarly the alternate station will experience the identical delay as the reference station between its XRB transmission and reception of ACKs from all stations.

Time required and sequence of events during duty transfer can be observed from the following illustration.

Refer to Figure 8 and suppose the reference station fails abruptly at the beginning of the superframe "3". The chain of events is demonstrated as follows:

| Superframe No. | Events |
|---|---|
| 3. | a. Reference station stops transmission of FRB (suffers hardware/software failure). |
| | b. Alternate and other stations transmit ACKs which respond to the FRB of the superframe "1" as $(XRB)_1$s. |
| | c. All receivers (reference, alternate and others inclusive) complete receiving and processing $(FRB)_2$ and $(XRB)_0$s. |
| | d. All receivers start to receive $(XRB)_1$s. |
| 4. | a. No transmission of FRB and XRB from reference. |
| | b. Alternate and other stations transmit ACKs which respond to the FRB of the superframe "2" as $(XRB)_2$s. |
| | c. All receivers complete receiving and processing $(XRB)_1$s and detect no FRB. |
| | d. All receivers start to receive $(XRB)_2$s. |
| 5. | a. No transmission of FRB and XRB from reference. |
| | b. Alternate and other stations transmit NACKs, $(\overline{XRB})_3$ which mean no FRB detection during superframe "3". |
| | c. Receivers complete receiving and processing $(XRB)_2$s and detect no FRB. |
| | d. Receivers start to detect NACKs. |
| 6. | a. No transmission of FRB and XRB from reference. |
| | b. Alternate and other stations transmit NACKs in response to no FRB received during superframe "4". |
| | c. Receivers complete receiving and processing of $(\overline{XRB})_3$s and detect no FRB. Alternate station sees NACKs which are larger than predetermined threshold and prepares to take over the reference role. |
| | d. Receivers start to detect $(\overline{XRB})_4$. |

7.  a. No transmission of FRB and XRB from reference.
    b. Alternate and other stations transmit NACKs in response to no FRB during the superframe "5".
    c. Receivers complete receiving and processing of $(\overline{XRB})_4$s and detect no FRB.
    d. Receivers start to detect $(\overline{XRB})_5$s.
    e. Alternate station is ready to transmit FRB.

8.  a. Alternate station transmits $(FRB)_8$.
    b. Other stations transmit NACKs in response to no FRB during superframe "6".
    c. Receivers complete receiving and processing of $(XRB)_5$s and detect no FRB.
    d. Receivers start to detect $(FRB)_8$ and $(\overline{XRB})_6$s.

The process keeps going on and the alternate receives ACKs for $(FRB)_8$ (1st FRB from alternate station), confirmed and completed, at the end of the 11th superframe. It is indicated in the bottom of Figure 8 that the baton passing from the failure of the reference station to the resumption of FRB transmission at the alternate station takes 1.8 seconds and it takes a total of 2.7 seconds from the reference failure to the restoration of FRB and confirmation of its receipt by the other stations.

Determining Channel Error Rate (CER)

The satellite link is assumed to be a binary symmetric channel. Significant error improvement can be achieved with random error correcting code. The FEC code, used in FRB and XRB is a block code, Quadratic Residue (17, 9) shortened to (16, 8) which provides a maximum of two error corrections. The resultant code rate is 1/2. The selection of this code is based upon the simplicity of implementation and its attractive performance relative to other codes. A table look-up technique is used for the decoding function.

Every assignment, status information, demand request or CRC requires two blocks of such coded words. The performance of this code at various CERs is tabulated in Table 3. The decoding error probabilities of a complete set of FRB and XRB can thus be evaluated.

TABLE 3
Performance of QR (17, 9) FEC code, shortened to (16, 8)
Prob. of decoding error

| CER | Per block | Per ass., status info. demand requirements or CRC |
|---|---|---|
| $10^{-4}$ | $5.6 \times 10^{-10}$ | $1.12 \times 10^{-9}$ |
| $10^{-3}$ | $5.53 \times 10^{-7}$ | $1.11 \times 10^{-6}$ |
| $10^{-2}$ | $4.9 \times 10^{-4}$ | $9.8 \times 10^{-4}$ |

Code rate 1/2
Max. No. of corrections 2.

Channel error rate (CER) can be determined by measurements of
(A) FRB,
(B) XRB, or
(C) Combination of XRB & FRB.

It has been determined that (1) measurement utilizing CRC errors may not yield accurate results, (2) the FRB measurement is superior since it depends only upon the reference station and is independent of number of stations in a transponder network, and (3) using the FRB offers advantages of a fixed length message per frame, and the number of bits per frame is large. Thus the method of determining CER is based on counting error blocks of the FEC'ed FRBs.

There are a total of 137 syndromes representing 0, 1, and 2-bit errors. The decoding scheme uses a table look-up method corresponding to these syndromes. From the syndrome one can determine whether 1-bit or 2-bit error has occurred.

The probabilities of no error P(0), 1-bit error P(1) and 2-bit error P(2) observed in the received coded messages via the satellite link with CER can be calculated from the frequency function or binominal distribution,

$$P(j) = \binom{16}{j}(CER)^j(1 - CER)^{16-j} \tag{1}$$

where $j = 0, 1, \ldots$ or 16.

The probability of decoding an error per FEC block ($P_{de}$) is the sum of P(j) where j=3, ... 16, or

$$P_{de}= \sum_{j=3}^{16} \binom{16}{j}(CER)^j(1-CER)^{16-j}$$
$$=1-P(0)+P(1)+P(2) \qquad (2)$$

The probabilities of possibile outcomes (j=0, 1, ..., 16 errors) have been calculated and are summarized in Table 4 for various channel environments.

TABLE 4

| P(j) | CER $10^{-6}$ | $10^{-5}$ | $10^{-4}$ | $10^{-3}$ | $10^{-2}$ | $10^{-1}$ |
|---|---|---|---|---|---|---|
| P(0) | 0.999 | 0.999 | 0.998 | 0.984 | 0.851 | 0.185 |
| P(1) | $1.599\times10^{-5}$ | $1.599\times10^{-4}$ | $1.597\times10^{-3}$ | $1.576\times10^{-2}$ | $1.376\times10^{-1}$ | 0.329 |
| P(2) | $1.999\times10^{-10}$ | $1.199\times10^{-8}$ | $1.198\times10^{-6}$ | $1.183\times10^{-4}$ | $1.042\times10^{-2}$ | 0.274 |
| $\sum_{3}^{16} P(j)$ | $5.599\times10^{-16}$ | $5.599\times10^{-13}$ | $5.594\times10^{-10}$ | $5.545\times10^{-7}$ | $5.079\times10^{-4}$ | 0.210 |

Probability of 0, 1, 2, ..., 16-bit error in a 16-bit coded message vs. CER.

Notice that:

O   When CER<$10^{-4}$, j=0 (no error) constitutes the majority outcomes and others are less than 0.16%. Within this 0.16%, the 1-bit error (j=1) is dominant.

O   In the range of $10^{-3}$<CER<$10^{-2}$, the 2-bit error (j=2) is coming into play and contributes some errors.

O   When CER>$10^{-2}$, P(3) ... or $\sum_{j=3}^{16}$ P(j) becomes larger.

O   For CER<$10^{-3}$, it can be written
$$P(1)\simeq1.6\,(CER)\times10$$
$$P(2)\simeq1.2\,(CER)^2\times10^2 \qquad (3)$$
$$\sum_{j=3}^{16} P(j)\simeq5.6\,(CER)^3\times10^2$$

In the region of interest, CER<$10^{-2}$, P(1) and P(2) are substantially larger than those given by

$$\sum_{j=3}^{16} P(j).$$

Then

$$P(1)+P(2)+ \sum_{j=3}^{16} P(j)\simeq P(1)+P(2) \qquad (4)$$

Therefore, by counting only the incidence of one and two-bit errors, the CER in the region of interest can be accurately approximated. Table 5 shows the total expected number of 1-bit and 2-bit errors versus the number of superframes and the 95% confidence intervals as a function of CER. The error count is obtained from the non-zero decoding syndrome. By accumulating these counts and comparing to the Table 2, the CER is determined. The counting interval should be long enough so that flutters of CER, such as an airplane passing through the link, etc. are ignored. The counting period, such as 200 or 400 superframes, is reasonable.

TABLE 5
No. of 1-bit errors plus No. of 2-bit errors versus No. of
superframes including 95% confidence intervals

| No. of superframes | Total No. of 16-bit coded words | $10^{-6}$ | $10^{-5}$ | $10^{-4}$ | $10^{-3}$ | $10^{-2}$ | $10^{-1}$ |
|---|---|---|---|---|---|---|---|
| 50 | $6 \times 10^4$ | 1 | $10 \pm 6$ | $105 \pm 20$ | $1048 \pm 63$ | $9770 \pm 193$ | $39860 \pm 391$ |
| 100 | $1 \times 10^5$ | 2 | $21 \pm 9$ | $211 \pm 28$ | $2096 \pm 89$ | $19540 \pm 274$ | $79721 \pm 553$ |
| 200 | $2 \times 10^5$ | $4 \pm 1$ | $42 \pm 12$ | $422 \pm 40$ | $4192 \pm 126$ | $39081 \pm 387$ | $159442 \pm 782$ |
| 400 | $5 \times 10^5$ | $8 \pm 5$ | $84 \pm 18$ | $844 \pm 56$ | $8384 \pm 179$ | $78162 \pm 548$ | $318884 \pm 1106$ |

In a satellite link, usually the down link is power limited. When the reference station broadcasts its FRBs, every station can count FEC errors to determine its own CER. The reference station is also able to determine its own CER by observing its looped back FRBs. This method is rather unique as it is an open loop method. The receiving station does not compare message sent to message received. Secondly it utilizes the FEC error syndromes to determine the error environments. The method samples the FEC coded messages during only a small portion of the frame. Since errors in the satellite link can be represented by a Gaussian random process, the measured CER during the sampled periods is indicative of CER throughout the frame. Thirdly it depends only upon the reference station and not other stations. The samples (FRBs) are received by all stations but the measurements conducted at every station are independent. Thus, any station experiencing high CER will not affect other station's measurements.

Determining Negative Acknowledgement (NACK) thresholds

The NACK threshold is calculated based upon a constant probability rather than a fixed percentage. The number of XRBs received is dependent on the number of stations. If a fixed percentage is good for a large number of stations, it will not yield a satisfactory answer for a small number of stations.

If the reference station fails, reception of the FRB stops about 250 msec later. Negative FRB acknowledgements are then sent in the XRB thereafter. For the alternate station to assume the role of reference station, it must observe at least a certain number of negative acknowledgements (Y NACKS, the threshold).

For an N-station network, the probability (P) that the alternate station incorrectly reads (N—Y) XRBs can be expressed by the frequency function as

$$P = \binom{N}{N-Y} P_{XRB}^{(N-Y)} \quad (1 - P_{XRB})^N \qquad (5)$$

where $P_{XRB}$=probability of XRB decoding errors at CER=$10^{-2}$. Use of CER=$10^{-2}$ is justified because the XRBs are well protected at CER=$10^{-4}$. This provides an additional protection so that the baton pass will occur in case of CER measurement failure.

P is assumed to be $10^{-4}$. If P is too small, Y is large and the system is not very sensitive. Conversely, if P is too large, Y is small and the system (baton passing) is too sensitive. Thus P=$10^{-4}$ is a compromise figure.

The resultant NACK threshold requirements thus calculated are illustrated in Tables 1 and 2.

**Claims**

1. Method for preventing failure of the system synchronization as the result of an impaired transmission of a frame reference burst, in a time division multiple access (TDMA) system having multiple stations and a frame format including one burst of transmitted data from each operating station in a nonoverlapping sequence, each frame format including said frame reference burst (FRB) from a primary reference station, and wherein the quality of said frame reference burst as received is monitored, characterized by the steps of:

organizing a plurality of said frame formats into a superframe, with each station in said system transmitting one transmit reference burst (XRB) during said superframe,

monitoring at each of said multiple stations said frame reference burst from said primary reference station and transmitting a negative acknowledgement signal (NACK) when it is not received;

monitoring at said primary reference station the number of said negative acknowledgement signals received and comparing it with a first threshold value;

monitoring at an alternate reference station said frame reference burst and the number of said negative acknowledgement signals received and comparing said number received at said alternate station with a second threshold value greater than said first value;

ceasing at said primary reference station said transmission of said frame reference bursts when said number of negative acknowledgement signals received thereat exceeds said first threshold value;

commencing at said alternate reference station the transmission of an alternate frame reference burst when said number of negative acknowledgement signals received thereat increases in response to said ceasing at said primary station so as to exceed said second threshold value and when no frame reference burst is received thereat from said primary station.

2. Method according to claim 1, prior to said ceasing step, further characterized by the following steps:

monitoring at each of said multiple stations said transmit reference burst (XRB) from said alternate reference station and transmitting an alternate negative acknowledgement signal when said alternate reference burst is not received;

monitoring at said alternate reference station the number of said alternate negative acknowledgement signals received and comparing it with a third threshold value;

transmitting from said alternate reference station a signal that it is relinquishing its alternate reference status when said number of alternate negative acknowledgement signals received thereat exceeds said third threshold value.

3. Method in accordance with claim 2, further characterized by the following steps:

monitoring at said primary reference station said relinquishing signal from said alternate station;

transmitting from said primary station an activation signal to a second one of said multiple stations in response to receiving said relinquishing signal;

activation at said second one of said multiple stations of the status as an alternate reference station.


**Patentansprüche**

1. Verfahren zum Verhindern einer Unterbrechung der Systemsynchronisierung als Folge einer beeinträchtigten Übertragung eines Rahmenbezugsbündels, in einem Zeitmultiplex-Vielfachzugriffssystem (TDMA), mit Vielfachstationen und einem Rahmenformat mit einem Bündel übertragener Daten von jeder Betriebsstation in einer nicht überlappenden Reihenfolge, wobei jedes Rahmenformat das Rahmenbezugsbündel (FRB) von einer primären Bezugsstation enthält, und worin die Qualität des Rahmenbezugsbündels wie erhalten überwacht wird, gekennzeichnet durch die folgenden Schritte:

Einordnung einer Mehrzahl solcher Rahmenformate in einem Hauptrahmen, wobei jede Station in diesem System ein Übertragungsbezugsbündel (XRB) während des Hauptrahmens überträgt;

Überwachung an jeder der Vielfachstationen des Rahmenbezugsbündels aus der primären Bezugsstation und Übertragung eines negativen Bestätigungssignals (NACK) bei Nichteingang;

Überwachung an der primären Bezugsstation der Anzahl der eingegangenen negativen Bestätigungssignale und Vergleich derselben mit einem ersten Schwellwert;

Überwachung an einer alternativen Bezugsstation des Rahmenbezugsbündels und der Anzahl der eingegangenen negativen Bestätigungssignale, und Vergleich dieser Anzahl an der alternativen Station mit einem zweiten Schwellwert, der größer ist als der erste Wert;

Einstellen an der primären Bezugsstation der Übertragung der Rahmenbezugsbündel, wenn die Anzahl der hier empfangenen negativen Bestätigungssignale den ersten Schwellwert übersteigt;

Beginn an der alternative Bezugsstation der Übertragung eines alternativen Rahmenbezugsbündels, wenn die Anzahl der dort empfangenen negativen Bestätigungssignale sich erhöht nach dem Einstellen an der primären Station, so daß der zweite Schwellwert überschritten wird, und wenn kein Rahmenbezugsbündel dort von der primären Station eingeht.

2. Verfahren nach Anspruch 1, dem Einstell-Schritt vorausgehend, weiterhin gekennzeichnet durch die folgenden Schritte:

Überwachung an jeder dieser Vielfachstationen des Übertragungsbezugsbündels (XRB) von der alternativen Bezugsstation und Übertragung eines alternativen negativen Bestätigungssignals, wenn das alternative Bezugsbündel nicht eingeht;

Überwachung an der alternativen Bezugsstation der Anzahl der alternativen eingegangenen negativen Bestätigungssignale und Vergleich mit einem dritten Schwellwert;

Übertragung von der alternativen Bezugsstation eines Signals, daß sie ihren alternativen Bezugsstatus aufgibt, wenn die Anzahl der alternativen, dort eingegangenen negativen Bestätigungssignale den dritten Schwellwert übersteigt.

3. Verfahren nach Anspruch 2, weiterhin gekennzeichnet durch folgende Schritte:

## 0 027 523

Überwachung an der primären Bezugsstation des Aufgabesignals von der alternativen Station;
Übertragung von der Primärstation eines Aktivierungssignals an eine zweite der Vielfachstationen nach Eingang des Aufgabesignals;
Betätigung der zweiten Vielfachstation des Status in der Funktion einer alternativen Bezugsstation.

**Revendications**

1. Procédé pour éviter la panne de synchronisation du système à la suite d'une transmission altérée d'un groupe de référence de trame, dans un système à accès multiple par division en temps (TDMA) comportant des stations multiples et un format de trame comprenant un groupe de données transmises depuis chaque station en fonctionnement dans une séquence sans chevauchement, chaque format de trame comprenant ledit groupe de référence de trame (FRB) émis d'une station de référence primaire, et dans lequel la qualité dudit groupe de référence de trame tel que reçu, est surveillé, caractérisé par les étapes suivantes:

agencement d'une pluralité desdits formats de trame en une supertrame, chaque station dans ledit système transmettant un groupe de référence de transmission (XRB) pendant ladite supertrame,
surveillance à chacune desdites stations multiples dudit groupe de référence de trame émis depuis ladite station de référence primaire et la transmission d'un signal d'accusé de réception négatif (NACK) lorsqu'il n'est pas reçu,
surveillance à ladite station de référence primaire du nombre desdits signaux d'accusé de réception négatif reçus et sa comparaison à une première valeur de seuil,
surveillance à une autre station de référence dudit groupe de référence de trame et du nombre desdits signaux d'accusé de réception négatif reçus et comparaison dudit nombre de signaux reçus à ladite autre station à une deuxième valeur de seuil plus grande que ladite première valeur,
arrêt à ladite station de référence primaire de ladite transmission desdits groupes de référence de trame lorsque ledit nombre des signaux d'accusé de réception négatif reçus excède ladite première valeur de seuil,
début à ladite autre station de référence de la transmission d'un autre groupe de référence de trame lorsque ledit nombre de signaux d'accusé de réception négatif reçus augmente en réponse audit arrêt à ladite station primaire de façon à excéder ladite deuxième valeur de seuil et lorsqu'aucun groupe de référence de trame n'est reçu depuis ladite station primaire.

2. Procédé selon la revendication 1 avant ladite étape d'arrêt, caractérisé en outre par les étapes suivantes:

surveillance à chacune desdites stations multiples dudit groupe de référence de transmission (XRB) depuis ladite autre station de référence et transmission d'un autre signal d'accusé de réception négatif lorsque ledit autre groupe de référence n'est pas reçu,
surveillance à ladite autre station de référence du nombre desdits autres signaux d'accusé de réception négatif reçus et sa comparaison à une troisième valeur de seuil,
transmission depuis ladite autre station de référence d'un signal qui abandonne son autre statut de référence lorsque ledit nombre des autre signaux d'accusé de réception négatif reçus excède ladite troisième valeur de seuil.

3. Procédé selon la revendication 2, caractérisé en outre par les étapes suivantes:

surveillance à ladite station de référence primaire dudit signal d'abandon depuis ladite autre station,
transmission depuis ladite station primaire d'un signal d'activation à une deuxième desdites stations multiples en réponse à la réception dudit signal d'abandon,
activation du statut à ladite deuxième station desdites stations multiples en tant qu'autre station de référence.

12

FIG. 1

SUPER FRAME
20 FRAMES

| FRAME GROUP 0 | FRAME GROUP 1 | FRAME GROUP 2 | FRAME GROUP 3 |

FRAME GROUP
5 FRAMES

| FRAME 0 | FRAME 1 | FRAME 2 | FRAME 3 | FRAME 4 |

FRAME

| CONTROL FIELD | TRAFFIC BURST 1 | TRAFFIC BURST 2 | TRAFFIC BURST 3 | TRAFFIC BURST n | UNASSIGNED |

CONTROL FIELD
10 - 1/2 CHANNELS

| FRB | ASSIGN-MENTS | GRD | NRB N | GRD | NRB N+20 | | | | NRB N+80 | GRD |

FRAME REFERENCE BURST- 3 CHANNELS    1-1/2 CHNL

TRAFFIC BURST
X + 1/2 CHANNELS

| BURST PREAM | ADDR 32 BITS | TRAFFIC 480 BITS | ADDR 32 | TRAFFIC 480 BITS | ADDR 32 | TRAFFIC 480 BITS | | ADDR 32 | TRAFFIC 480 BITS |

1/2 CHNL

SUPER FRAME FORMAT
CHANNEL = 512 BITS

FIG. 2

FIG. 3

FIG. 4

**REFERENCE STATION CER$\leq 10^{-4}$**

**ALTERNATE STATION CER$\leq 10^{-4}$**

**REF. & ALT. GROUP / HEALTHY STATIONS CER$< 10^{-2}$**

**REF. & ALT. GROUP / NON-HEALTHY STATIONS CER $> 10^{-2}$ OR MALFUNCTION**

SMF/OP

SMF/OP

SMF/OP

{(REF NACK>FIG. 6)(OR A PRE-FIXED THRESHOLD LEVEL) o $\overline{FRB}$}

SMF/OP + {(REF NACK>FIG. 7(OR A PRE-FIXED THRESHOLD LEVEL)+CER > $10^{-4}$} o ALT

($\overline{SYNC}$ + CER>$10^{-2}$) ALT + MALFUNCTION

MALFUNCTION + $\overline{SYNC}$ + CER>$10^{-2}$

(SMF/OP + REF ASSIGN)

SMF/OP + {ALT. NACK>FIG. 7(OR A PRE-FIXED THRESHOLD LEVEL)+CER>$10^{-4}$}

MALFUNCTION + $\overline{SYNC}$ + CER>$10^{-2}$

MALFUNCTION + $\overline{SYNC}$ + CER > $10^{-2}$

SYNC o CER $\leq 10^{-4}$

SYNC o CER $\leq 10^{-4}$

SYNC o CER $\leq 10^{-4}$

NOTE:
$\overline{SYNC}$ = LOSS OF SYNC
ALT = PRESENCE OF HEALTHY ALTERNATE
$\overline{FRB}$ = NO FRB
+ = OR FUNCTION ; o = AND FUNCTION

FIG. 7

0 027 523

## FIG. 8a

| SUPER FRAME | 0 | 1 | 2 | 3 | 4 | 5 |
|---|---|---|---|---|---|---|
| REFERENCE STATION TRANSMIT | $(FRB)_0$ | $(FRB)_1$ | $(FRB)_2$ &$(XRB)_0$ | | | |
| REFERENCE STATION RECEIVE | | $(FRB)_2$ | $(FRB)_1$ | $(FRB)_2 + \Sigma(XRB)_0$ | $\Sigma(XRB)_1$ | $\Sigma(XRB)_2$ |
| STATION TRANSMIT | | | $(XRB)_0$ | $(XRB)_1$ | $(XRB)_2$ | $\overline{(XRB)_3}$ |
| STATION RECEIVE | | $(FRB)_0$ | $(FRB)_1$ | $(FRB)_2 + \Sigma(XRB)_0$ | $\Sigma(XRB)_1$ | $\Sigma(XRB)_2$ |
| ALTERNATE STATION TRANSMIT | | | $(XRB)_0$ | $(XRB)_1$ | $(XRB)_2$ | $\overline{(XRB)_3}$ |
| ALTERNATE STATION RECEIVE | | $\{FRB)_0$ | $(FRB)_1$ | $(FRB)_2 + \Sigma(XRB)_0$ | $\Sigma(XRB)_1$ | $\Sigma(XRB)_2$ |

ROUND TRIP DELAY

$(FRB)_3$ FAILS

NO FBR RECEIVED

TRANSMIT NACK

18 SEC

## FIG. 8b

| | 6 | 7 | 8 | 9 | 10 | 11 | 12 |
|---|---|---|---|---|---|---|---|
| | $\sum(\overline{XRB})_3$ | $\sum(\overline{XRB})_4$ | $\sum(\overline{XRB})_5$ | $\sum(\overline{XRB})_6 + (FRB)_8$ | $\sum(\overline{XRB})_7 + (FRB)_9$ | $(FRB)_{10} + \sum(XRB)_8$ | |
| | $(\overline{XRB})_4$ | $(\overline{XRB})_5$ | $(\overline{XRB})_6$ | $(\overline{XRB})_7$ | $(XRB)_8$ | $(XRB)_9$ | |
| | $\sum(\overline{XRB})_3$ | $\sum(\overline{XRB})_4$ | $\sum(\overline{XRB})_5$ | $\sum(\overline{XRB})_6 + (FRB)_8$ | $\sum(\overline{XRB})_7 + (FRB)_9$ | $(FRB)_{10} + \sum(XRB)_8$ | |
| | $(\overline{XRB})_4$ | $(\overline{XRB})_5$ | $(FRB)_8$ | $(FRB)_9$ | $(FRB)_{10}$ | $(FRB)_{11}$ | |
| | $\sum(\overline{XRB})_3$ | $\sum(\overline{XRB})_4$ | $\sum(\overline{XRB})_5$ | $\sum(\overline{XRB})_6$ | $\sum(\overline{XRB})_7 + (FRB)_9$ | $(FRB)_{10} + \sum(XRB)_8$ | |
| | NACK RECEIVED & PROCESSING | ALTERNATE STA-TION SET-UP TIMING & READY FOR TRANSMIT FRB | ALTERNATE TRANSMITS FRB | | | 1ST ACK FOR ALTER-NATE FRB CONFIRM-ED & COMPLETED | |

2.7 SEC

0 027 523

FIG. 5

FIG. 6